# EUROPÄISCHE PATENTSCHRIFT

(11) **EP 2 796 284 B1**
(45) Veröffentlichungstag und Bekanntmachung des Hinweises auf die Patenterteilung: **06.04.2022**
(21) Anmeldenummer: 14165568.8
(22) Anmeldetag: 23.04.2014
(51) Int. Cl.: B32B 5/02, B32B 13/14, B32B 3/30, E04F 15/18, E04B 1/66

(54) **Abdichtungsbahn**
Sealing web
Bande d'étanchéité

(30) Priorität: 25.04.2013 DE 202013101789 U
(43) Veröffentlichungstag der Anmeldung: 29.10.2014
(73) Patentinhaber: Gebrüder Jaeger GmbH, 42369 Wuppertal (DE)
(72) Erfinder: Rittmann, Frank, D-42289 Wuppertal (DE)
(74) Vertreter: Müller, Enno

(56) Entgegenhaltungen:
- DE-U1-202013 102 684

## Beschreibung

Die Erfindung betrifft eine Abdichtungsbahn nach den Merkmalen des Oberbegriffes des Anspruches 1.

Derartige Abdichtungsbahnen sind bereits in vielfältiger Hinsicht bekannt geworden. Es wird beispielsweise auf die DE 19507858 A1 verwiesen.

Aus der WO 02/46551 A1 ist ein Abdichtungs- und Drainagesystem bekannt, bei welchem eine von zwei Kunststofflagen als Drainagegitter ausgebildet ist. Die nach außen weisende Verbindungsfläche des Drainagegitters ist mit einer Vlieslage überdeckt. Die zweite nach außen weisende Verbindungsfläche dieses Abdichtungs- und Drainagesystems ist durch eine Kunststoff- oder Bitumenschicht gebildet. Die Kunststofflage und das Drainagegitter sind hinsichtlich ihrer sonstigen Eigenschaften gleich ausgebildet.

Ausgehend von dem dargelegten Stand der Technik beschäftigt sich die Erfindung mit der Aufgabenstellung, eine Abdichtungsbahn anzugeben, die sowohl hinsichtlich Abdichtung wie auch Beständigkeit günstig ausgebildet ist.

Diese Aufgabe ist beim Gegenstand des Anspruches 1 gelöst, wobei darauf abgestellt ist, dass die Abdichtungsbahn aus zwei flächig übereinander angeordneten Kunststofflagen besteht, einer ersten Kunststofflage und einer zweiten Kunststofflage, wobei weiter beide Kunststofflagen auf einer nach außen weisenden Verbindungsfläche vollflächig mit einer ersten Vlieslage und einer zweiten Vlieslage, versehen sind und die erste Kunststofflage durch eine homogene Verteilung von UV-Stabilisatoren in der Kunststofflage eine höhere UV-Beständigkeit aufweist als die zweite Kunststofflage.

Die Vlieslagen der Abdichtungsbahn weisen bevorzugt eine unterschiedliche Färbung auf. Sie sind durch einfache Betrachtung hinsichtlich der Außenflächen unterscheidbar. Die Vlieslagen können zur Folge einer dieser mit der Kunststofflage verbindenden Klebeschicht, die eingefärbt ist, farblich unterschiedlich erscheinen.

Die Abdichtungsbahn ist konkret bevorzugt eine Fliesenverbundabdichtungsbahn. Eine solche Abdichtung wird auch als Abdichtung im Verbund (AiV) bezeichnet.

Die Unterscheidbarkeit kann dadurch gegeben sein, dass die beiden Kunststofflagen beispielsweise blau und grau farblich eingestellt sind. Andererseits ist aber auch alternativ oder ergänzend eine unterschiedliche geometrische Gestaltung, etwa durch Noppenbildung, unterschiedlich nach den Seiten, möglich. Nicht zuletzt kann durch Noppenbildung oder sonstige Ausführung auch die Unterschiedlichkeit durch eine sich hierdurch ergebende Beschriftung, wie etwa "oben" und "unten" gegeben sein. Die Beschriftung kann sich entsprechend vielfältig wiederholend vorgesehen sein.

Die weiter vorgesehene vollflächige Belegung einer oder der Kunststofflagen auf einer oder den Verbindungsflächen mit einer Vlieslage, wobei im Falle von mehreren Kunststofflagen diese bevorzugt vollflächig überdeckend aufeinanderliegend vorgesehen sind, ermöglicht es zugleich, auch unterschiedliche Vlieslagen hierfür vorzusehen. Hiermit kann eine Spezialisierung der jeweils vorgesehenen Vlieslage erreicht werden, einerseits im Hinblick auf die Verhaftung mit darauf aufgebrachten Fliesen, etwa vermittels eines Fliesenklebers, und andererseits im Hinblick auf eine Verhaftung mit dem Untergrund, etwa vermittels eines diesbezüglichen Klebstoffs.

Die erste Kunststofflage weist eine höhere UV-Beständigkeit auf als die zweite Kunststofflage Die höhere UV-Beständigkeit ist durch homogene Verteilung von entsprechenden UV-Stabilisatoren in dem verwendeten Kunststoff erreicht s.

Die erste Kunststofflage ist im Zusammenhang der Beschreibung bevorzugt diejenige, die "oben" angeordnet ist, also im Einbauzustand zugeordnet der Fliesenlage.

Die geringere Alkali-Beständigkeit kann durch eine besondere Wahl des hierfür verwendeten Kunststoffs gegeben sein.

Die erste Kunststofflage kann darüber hinaus mit einem kapillararmen Vlies, insbesondere im Vergleich zu dem auf der anderen Außenseite verwendeten Vlies, versehen sein. Ein kapillararmes Vlies ist mit dem Vorteil verbunden, dass weniger Wasser hierin speicherbar ist, also der Abdichtungszweck günstiger erfüllt werden kann.

Das Vlies auf der ersten Kunststofflage kann ergänzend oder alternativ auch besonders haftfreundlich ausgebildet sein. Dies kann etwa in einer größeren Freiständigkeit von Vliesfasern gegeben sein als sie auf der gegenüberliegenden Seite, der diesbezüglichen Vliesbelegung, vorgesehen sind.

Auch kann die erste Kunststofflage mit einem Antischimmelmittel ausgerüstet sein. Hiermit kann eventuell vorkommender Schimmelbildung auch hierdurch aktiv entgegengewirkt werden.

Die zweite Kunststofflage kann insbesondere besonders klebefreundlich ausgebildet sein, dies einmal im Hinblick auf die Kunststofflage selbst. Zum anderen aber auch im Hinblick auf das Vlies, das auf diese Kunststofflage aufgebracht ist.

Die Kunststofflagen können durch eine Klebeschicht miteinander flächig verbunden sein. Sie können aber auch durch ledigliche Koextrusion miteinander verbunden sein, indem sie noch im Schmelzzustand aneinanderliegend, etwa auch durch Walzen geführt, gedrückt oder gepresst werden.

Die Vlieslagen können auch grundsätzlich durch eine Klebelage mit der jeweiligen Kunststofflage verbunden sein. Bevorzugt ist insofern, dass sie auch kaschiert sind, d.h. im noch verbindungsfähigen erwärmten Zustand, nach dem Extruder, sogleich in die Kunststofflage flächig eingedrückt werden.

Eine derartige Abdichtungsbahn kann eine Breite von 20 cm bis 200 cm oder auch mehr, etwa bis zu 3 m, aufweisen. Sie kann eine Dicke zwischen etwa 0,3 und 1 mm oder auch mehr, bis hin zu 2 oder 3 mm, aufweisen.

Nachstehend ist die Erfindung anhand der beigefügten Zeichnung, die lediglich ein Ausführungsbeispiel darstellt, erläutert. Hierbei zeigt:
- Fig. 1: eine perspektivische Ansicht, vorderseitig geschnitten, der Abdicht-bahn, hinsichtlich der Lagen in stark vergrößerter Darstellung;
- Fig. 2: einen Querschnitt durch einen Bodenbelag, ausgebildet unter Nutzung der Abdichtungsbahn;
- Fig. 3: eine weitere Ausführungsform mit einer Kunststofflage und zwei Vlieslagen;
- Fig. 4: eine weitere perspektivische Darstellung gemäß Fig. 1 einer Ausführungsform mit zwei Kunststofflagen;
- Fig. 5: eine nochmals weitere perspektivische Darstellung gemäß Fig. 1 einer weiteren Ausführungsform mit einer Kunststofflage;
- Fig. 6: eine nochmals weitere Ausführungsform einer Abdichtungsbahn mit einer Kunststofflage und zwei funktionsmäßig unterschiedlichen Vlieslagen; und
- Fig.7: eine weitere perspektivische Darstellung gemäß Fig. 1 einer weiteren Ausführungsform.

Dargestellt und beschrieben ist eine Abdichtungsbahn 1, wie sie insbesondere im Sanitärbereich, etwa zur Bodenabdichtung, zur Anwendung kommen kann.

Die Abdichtungsbahn 1 besteht beim Ausführungsbeispiel aus einer im Einbauzustand oberen ersten Kunststofflage 2 und einer im Einbauzustand unteren zweiten Kunststofflage 3. Die beiden Kunststofflagen sind beim Ausführungsbeispiel zur Verdeutlichung mit einer Klebelage 4 verbunden. Sie können aber auch unmittelbar aufeinanderliegend, durch gegeneinander Kaschieren im Zuge des Extrusionsverfahrens, verbunden sein.

Die beiden Kunststofflagen 2, 3 sind ersichtlich flächendeckend geschlossen übereinanderliegend vorgesehen.

Beide Kunststofflagen 2, 3 sind auf einer Seite, der jeweiligen Außenseite, mit einer Vlieslage, einer ersten Vlieslage 5 und einer zweiten Vlieslage 6, vollflächig abgedeckt.

Die Kunststofflagen 2, 3 sind so gestaltet beziehungsweise ausgebildet, dass sie durch einfache Betrachtung unterscheidbar sind. Vorzugsweise ist dies durch eine unterschiedliche Einfärbung der ersten Kunststofflage 2 und der zweiten Kunststofflage 3 erreicht. Die Einfärbung ist bevorzugt homogen in der gesamten Kunststofflage vorgenommen. Die Vlieslage ist so, insbesondere bevorzugt so dünn, ausgebildet, dass die Einfärbung der Kunststofflage das farbliche Aussehen auf der betreffenden Seite der Abdichtungsbahn bestimmt. Bezüglich der Vlieslage kann die farbliche Einstellung durchscheinend sein. Alternativ oder ergänzend ist es auch möglich, dass das Vlies selbst farblich - übereinstimmend zu der Kunststofflage - ausgebildet ist.

Weiter bevorzugt besteht die Einfärbung darin, dass die erste Kunststofflage 2 blau erscheint und die zweite Kunststofflage 3 grau.

Die erste Kunststofflage 2 zeichnet sich überdies dadurch aus, dass sie eine geringere Alkalibeständigkeit aufweist als die zweite Kunststofflage 3 und mit einem Antischimmelmittel ausgerüstet ist. Zudem ist die erste Kunststofflage 2 so ausgebildet, dass sie eine höhere UV-Beständigkeit aufweist als die zweite Kunststofflage 3.

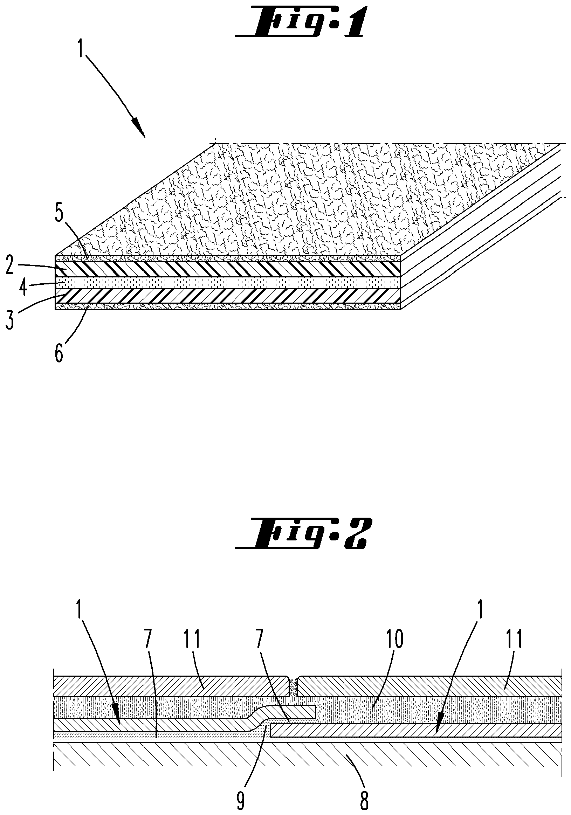

Die erste Vlieslage 5 besteht aus einem haftfreundlichen Vlies, das ebenfalls im Vergleich zu dem Vlies der zweiten Vlieslage 6 haftfreundlicher ist. Hiermit kann eine günstige Verhaftung zu der Vlieslage erreicht werden, wie dies im Einzelnen auch in Figur 2 dargestellt ist. Die zweite Kunststofflage 3 ist im weiteren, gegebenenfalls im Verbund mit der zweiten Vlieslage 6, klebefreundlich ausgebildet.

Mit Bezug zu Figur 2 ist zu erkennen, dass die bevorzugte Einbausituation einer derartigen Abdichtbahn 1 dadurch gegeben ist, dass die Abdichtungsbahn 1 vermittels einer Klebelage 7 auf dem Untergrund 8, der etwa durch eine Estrichlage gegeben sein kann, aufliegt und hiermit klebeverbunden ist. Der sich ergebende Zwickel 9 ist auch nur zu Darstellungszwecken übertrieben dargestellt. Er kann durch Klebstoff gefüllt sein beziehungsweise durch Verdrücken sehr gering gehalten sein.

Auf der Oberseite der Abdichtbahn 1, beziehungsweise einem Verbund von Abdichtbahnen 1, wie in Figur 2 dargestellt, ist eine Fliesenkleberlage 10 aufgebracht, mit der auch eventuelle Unebenheiten ausnivelliert werden können. Mittels der Fliesenkleberlage 10 sind Fliesen 11 mit der Abdichtungsbahn 1 letztlich verhaftet.

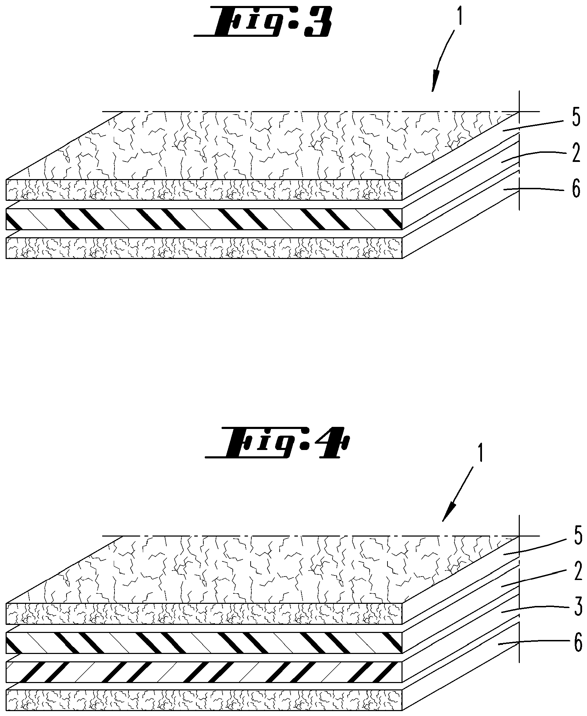

Gemäß einer in Fig 3 dargestellten Ausführungsform können die ober- und unterseitig vorgesehenen ersten und zweiten Vlieslagen 5 und 6 hinsichtlich ihrer Färbung unterschiedlich gewählt sein. Beispielsweise kann eine der Vlieslagen 5 oder 6 blau und die andere Vlieslage beispielsweise grau eingefärbt sein. Die hierdurch erreichte Unterscheidbarkeit von Ober- und Unterseite der Abdichtungsbahn 1 ermöglicht es dem Benutzer vor Ort, die Abdichtungsbahn 1 seitenrichtig zu verwenden.

Alternativ zur Einfärbung der Vlieslagen 5 und/oder 6 können auch die hierunter angeordneten ersten und/oder zweiten Kunststofflagen 2 und/oder 3 unterschiedlich farbig gestaltet sein (vergl. Fig 4). Eine zwischen den Kunststofflage 2 bzw. 3 und der Vlieslage 5 bzw. 6 vorgesehene Klebstofflage ist hierbei bevorzugt transparent gehalten. Durch die hierüber angeordnete Vlieslage 5 bzw. 6 ist die Farbe der Kunststofflage 2 bzw. 3 zur lagerichtigen Verwendung der Abdichtungsbahn 1 zu erkennen.

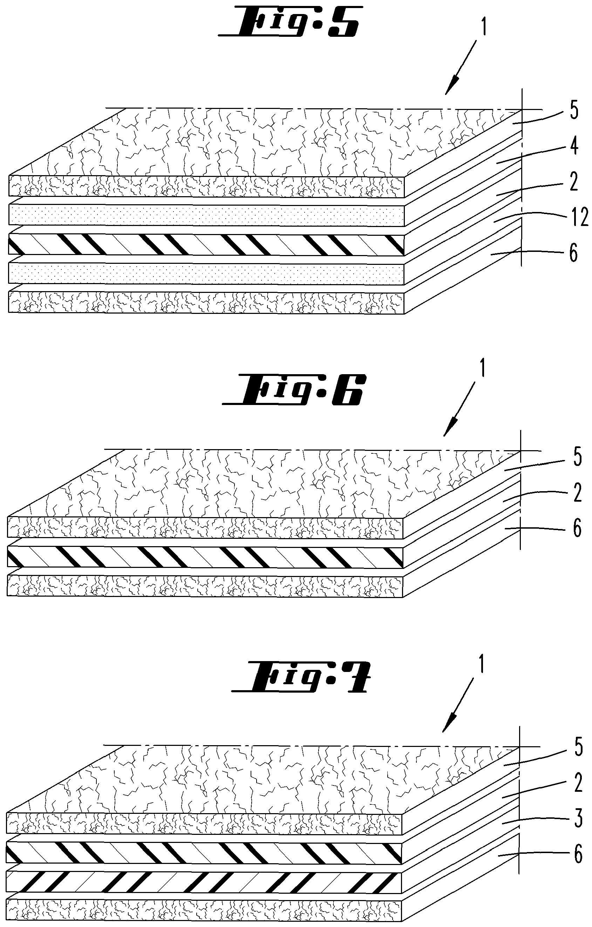

Beispielsweise bei einer Anordnung von nur einer Kunststofflage 2 zwischen den Vlieslagen 5 und 6 können auch die Klebelagen (erste Klebelage 4 und zweite Klebelage 12) zwischen der Kunststofflage 2 und den Vlieslagen 5 und 6 farblich eingestellt sein, insbesondere farblich unterschiedlich (siehe Fig. 5).

Fig. 6 zeigt eine Ausführungsform, bei welcher die Vlieslagen hinsichtlich ihrer Funktionalität unterschiedlich eingestellt sind. So kann beispielsweise eine Vlieslage 5 oder 6 ein kapillararmes Vlies sein.

Die Vlieslage dient in ihrem Aufbau grundsätzlich dazu, als Haftbrücke zu bauchemischen Klebstoffen zu wirken. Gleichzeitig bilden Vliesstoffe aufgrund ihres physikalischen Aufbaus eine wasserführende Schicht, die im Überlappungsbereich im ungünstigen Fall zu einer Undichtigkeit führen kann. Auf der wasserzugewandten Seite kann beispielsweise ein Polyester-Vlies hydrophobiert sein, etwa mit einer speziellen Kunstharzaurüstung. Auch kann ein Vlieswerkstoff verwendet werden, das aufgrund der chemischen Strultur hydrophob ist, bspw. Polypropylen. Auf der wasserabgewandten Seite wird im Gegensatz dazu bspw. ein unbehandeltes hydrophiles Polyestervlies verwendet, um eine optimale Durchdringung des bauchemischen Kleber zu erreichen.

Im dem Fall, dass Brandschutz eine besondere Rolle spielt, wird die Vlieslage 5 oder 6, die dem Innenraum zugewandt angeordnet wird, flammhemmend ausgerüstet, etwa durch Verwendung von flammhemmenden Aprreturen oder durch Verwendung von flammhemmenden Fasern.

Die dem Bauwerk zugewandte Seite der Abdichtungsbahn 1 benötigt eine auf die Oberfläche abgestimmte Haftbrücke. Entsprechend kann eine Vlieslage 5 oder 6 mit erhöhter Haftwirkung vorgesehen sein.

Voluminöse Vliese wie bspw. Nadelvliese erzielen sehr gute Haftzugwerte bei hoher Rissaufnahme. Diese Vliese haben sich jedoch zur Anordnung im Wandbereich nicht durchgesetzt. Hierfür werden bevorzugt thermisch verfestigte Vliese und Wasserstrahlvliese eingesetzt.

So kann für die Bodenmontage ein Nadelvlies verwendet werde, während für die Wandmontage ein thermisch- oder wasserstrahlverfestigtes Vlies zur Anwendung kommt. Beide Seiten der Abdichtungsbahn 1 können so individuell auf die Oberfläche bzw. auf den verwendeten Bauklebstoff optimiert sein, um höhere Haftzugwerte zu generieren und dem Gewerke eine höhere Haltbarkeit zu sichern.

In Bereichen, in denen die Gefahr einer Schimmelbildung hoch ist, bspw. unterhalb einer Badewanne, kann eine Abdichtungsbahn 1 vorgesehen werden, deren eine Vlieslage 5 oder 6 antimykotisch ausgerüstet ist, so dass die Entstehung von Schimmelsporen minimiert wird. Die Vlieslage ist hierzu bspw. mit einem Antimykotikum versehen.

Auch kann eine Vlieslage 5 oder 6 entkoppelnde Eigenschaften aufweisen. Hierzu werden insbesondere voluminöse Vliese wie etwa Nadelvliese mit bevorzugt 90 bis 1000 g/m² verwendet.

Verschiedene Eigenschaften können in einer Abdichtungsbahn 1 kombiniert werden, so bspw. oben flammhemmend und unten entkoppelnd.

Zudem können auch Vlieslagen mit speziellen chemischen Beständigkeiten zur Anwendung kommen. Je nach Anwendungsfall kann es nötig sein, dass man der dem Raum zugewandten Seite eine erhöhte chemische Beständigkeit zu der ohnehin geforderten Alkalibeständigkeit zuweist. So kann bspw. bei Anordnung einer Abdichtungsbahn 1 in Großküchen oder dergleichen vorgesehen sein, der dem Raum zugewandten Seite eine Beständigkeit gegenüber starken Reinigungsmitten, Säuren, Laugen, Fetten usw. zu geben, wie dies bspw. Polypropylenvliese mit sich bringen, und der dem Raum abgewandten Seite ein haftfreundliches aber chemisch nicht so beständiges Polyestervlies zuzuordnen.

Auch können die Vlieslagen 5 und/oder 6, gegebenenfalls unterschiedliche spezielle physikalische Eigenschaften aufweisen. Beispielsweise finden hier voluminöse Vliese Verwendung, die aufgrund ihrer Konstruktion ein niveauausgleichendes oder rissüberbrückendes Moment erbringen oder beispielsweise schallreduzierend wirken. Solche bekannten Vliese können die Wirkungsweise der Abdichtungsbahn 1 an der geforderten Seite weiter verstärken.

Weiter ist auch eine Kombination der vorbeschriebenen Funktionen möglich.

Wie weiter in Fig. 7 beispielhaft dargestellt, können auch die Kunststofflagen 2 und/oder 3 hinsichtlich ihrer Funktionalität unterschiedlich eingestellt sein. So kann eine Kunststofflage 2 oder 3 oder können beide Kunststofflagen 2 und 3 als flammhemmende Kunststofflage und/oder als Lage mit erhöhter Haftverbindung ausgebildet sein. Zudem kann eine oder beide Lagen eine stabilisierende Wirkung aufweisen und/ oder mit einer definierten Wasserdampfdiffusion versehen sein.

Eine Kunststofflage 2 und/ oder 3 kann eine erhöhte UV-Beständigkeit aufweisen oder Sensoren bzw. Indikatoren zur Feuchteerkennung, gegebenenfalls Sensoren für andere funktionelle Anforderungen.

Zudem sind Kunststofflagen 2 und/ oder 3 mit speziellen chemischen oder physikalischen Beständigkeiten bzw. Eigenschaften möglich.

Es ist eine Kombination der vorgenannten Eigenschaften möglich, so bspw. eine Kombination aus Farbe und Funktion.

Die unterschiedliche farbliche Einstellung wirkt unterstützend, um dem Benutzer die richtige funktionelle Lage zu markieren, so dass der Einbau bzw. die Einbaurichtung der Abdichtungsbahn 1 korrekt vorgenommen werden kann. Dies kann zusätzlich in Kombination mit unterschiedlich farbigen Klebesystemen bzw. Dichtstoffen geschehen.

## Patentansprüche

1. Abdichtungsbahn (1) auf Basis einer Kunststofffolie, zur Verwendung insbesondere im Sanitärbereich, beispielsweise zur Anordnung zwischen Fliesen (11) und einem Boden (8), etwa einer Estrichlage, wobei die Abdichtungsbahn zwei flächige Außenseiten aufweist und die Außenseiten so gestaltet sind, dass sie unterschiedliche Eigenschaften aufweisen, **dadurch gekennzeichnet, dass** die Abdichtungsbahn aus zwei flächig übereinander angeordneten Kunststofflagen besteht, einer ersten Kunststofflage (2) und einer zweiten Kunststofflage (3), wobei weiter beide Kunststofflagen (2, 3) auf einer nach außen weisenden Verbindungsfläche vollflächig mit einer ersten Vlieslage (5) und einer zweiten Vlieslage (6), versehen sind und die erste Kunststofflage (2) durch eine homogene Verteilung von UV-Stabilisatoren in der Kunststofflage (2) eine höhere UV-Beständigkeit aufweist als die zweite Kunststofflage (3).

2. Abdichtungsbahn (1) nach Anspruch 1, **dadurch gekennzeichnet, dass** die Vlieslagen (5, 6) zueinander unterschiedliche Färbung aufweisen.

3. Abdichtungsbahn (1) nach Anspruch 2, **dadurch gekennzeichnet, dass** die Vlieslagen (5, 6) zufolge einer diese mit der Kunststofflage verbindenden Klebeschicht, die eingefärbt ist, farblich unterschiedlich sind.

4. Abdichtungsbahn (1) nach einem der vorhergehenden Ansprüche, **dadurch gekennzeichnet, dass** die erste Kunststofflage (2) mit einem Antischimmelmittel ausgerüstet ist.

## Claims

1. Sealing web (1) based on a plastics film, for use in particular in sanitary facilities, for example for arrangement between tiles (11) and a substrate (8), such as a screed layer, the sealing web having two planar outer faces and the outer faces being designed so as to have different properties, **characterised in that** the sealing web consists of two plastics layers, a first plastics layer (2) and a second plastics layer (3), arranged surface-to-surface one on top of the other, with both plastics layers (2, 3) also being provided, on an outwardly facing connection surface and over the entire surface thereof, with a first nonwoven layer (5) and a second nonwoven layer (6), and the first plastics layer (2), due to a homogeneous distribution of UV stabilisers in the plastics layer (2), having a higher UV resistance than the second plastics layer (3).

2. Sealing web (1) according to claim 1, **characterised in that** the nonwoven layers (5, 6) are different colours from one another.

3. Sealing web (1) according to claim 2, **characterised in that** the nonwoven layers (5, 6) are different in colour as a result of an adhesive coat which connects said nonwoven layers to the plastics layer and which is coloured.

4. Sealing web (1) according to any of the preceding claims, **characterised in that** the first plastics layer (2) is equipped with an anti-mould agent.

## Revendications

1. Bande d'étanchéité (1) à base d'un film plastique, destinée à être utilisée en particulier dans le domaine sanitaire, par exemple pour être disposée entre des carreaux (11) et un sol (8), par exemple une couche de chape, la bande d'étanchéité présentant deux faces extérieures planes et les faces extérieures étant conçues de manière à présenter des propriétés différentes, **caractérisée en ce que** la bande d'étanchéité est constituée de deux couches de plastique disposées à plat l'une sur l'autre, une première couche de matière plastique (2) et une deuxième couche de matière plastique (3), les deux couches de matière plastique (2, 3) étant en outre pourvues sur toute leur surface d'une première couche de non-tissé (5) et d'une deuxième couche de non-tissé (6) sur une surface de liaison dirigée vers l'extérieur, et la première couche de matière plastique (2) présentant une résistance aux UV plus élevée que la deuxième couche de matière plastique (3) grâce à une répartition homogène de stabilisateurs UV dans la couche de matière plastique (2).

2. Bande d'étanchéité (1) selon la revendication 1, **caractérisée en ce que** les couches de non-tissé (5, 6) présentent des colorations différentes l'une par rapport à l'autre.

3. Bande d'étanchéité (1) selon la revendication 2, **caractérisée en ce que** les couches de non-tissé (5, 6) sont de couleurs différentes en raison d'une couche adhésive les reliant à la couche de matière plastique et qui est colorée.

4. Bande d'étanchéité (1) selon l'une quelconque des revendications précédentes, **caractérisée en ce que** la première couche de matière plastique (2) est traitée avec un agent anti-moisissure.
